(19) **Europäisches Patentamt**

**European Patent Office**

**Office européen des brevets**

(11) **EP 1 604 257 B1**

(12) **EUROPEAN PATENT SPECIFICATION**

(45) Date of publication and mention
of the grant of the patent:
**06.12.2006 Bulletin 2006/49**

(51) Int Cl.:
**G06F 1/00** $^{(2006.01)}$

(21) Application number: **04708412.4**

(22) Date of filing: **05.02.2004**

(86) International application number:
**PCT/IB2004/000397**

(87) International publication number:
**WO 2004/070506 (19.08.2004 Gazette 2004/34)**

(54) **A METHOD AND SYSTEM FOR IDENTIFYING AN AUTHORIZED INDIVIDUAL BY MEANS OF UNPREDICTABLE SINGLE-USE PASSWORDS**

VERFAHREN UND VORRICHTUNG ZUR IDENTIFIZIERUNG EINES AUTHORISIERTEN PERSON MITTELS NICHT VORHERSAGBAREN EINMAL BENUTZBAREN PASSWORTERN

PROCEDE ET SYSTEME D'IDENTIFICATION D'UNE PERSONNE AUTORISEE AU MOYEN DE MOTS DE PASSE A USAGE UNIQUE NON PREVISIBLES

(84) Designated Contracting States:
**AT BE BG CH CY CZ DE DK EE ES FI FR GB GR
HU IE IT LI LU MC NL PT RO SE SI SK TR**

(30) Priority: **06.02.2003 IT TO20030079**

(43) Date of publication of application:
**14.12.2005 Bulletin 2005/50**

(73) Proprietor: **CONSIGLIO NAZIONALE DELLE
RICERCHE - INFM ISTITUTO
NAZIONALE PER LA FISICA DELLA MATERIA
16152 Genova GE (IT)**

(72) Inventors:
• **POLICHETTI, Massimiliano
84080 Casali di Roccapiemonte (Salerno) (IT)**
• **BLASONE, Massimo
84024 Contursi Terme (Salerno) (IT)**

(74) Representative: **Deambrogi, Edgardo et al
Jacobacci & Partners S.p.A.
Corso Emilia, 8
10152 Torino (IT)**

(56) References cited:
**US-A1- 2002 002 678        US-A1- 2002 087 860**

• **HALLER N M: "THE S/KEYTM ONE-TIME
PASSWORD SYSTEM" ISOC SYMPOSIUM ON
NETWORK AND SYSTEMS SECURITY, XX, XX,
1994, pages 151-157, XP000565853 -& HARRIS J
A: "OPA: a one-time password system"
PROCEEDINGS OF THE INTERNATIONAL
CONFERENCE ON PARALLEL PROCESSING
WORKSHOPS, 18 August 2002 (2002-08-18),
pages 25-29, XP010608427**

**Description**

The present invention relates in general to the sector of computer security, and more specifically a method and a system for the identification of a party authorised to have the benefit of a service via a communications network.

The present invention is applicable to systems administering access to protected sites and/or managing commercial transactions, and in general for services which involve the communication of confidential data, in which a party having the benefit of goods/services, or client (user), communicates with a party delivering goods/services, or provider, and/or has the benefit of such goods/services, via a public communications network or other network, whether protected or unprotected from intrusions by third parties.

The present invention is also applicable in systems to control the access of a party to locations or areas, for example those restricted to authorised personnel.

In this connection it should be noted that the term "party" as used in the present invention and in the claims which follow is intended to refer in general and without distinction both to a user who operates actively on the network via universal interface devices by means of which he manually performs an identification procedure, and to a user for whom the identification procedure is conducted automatically by a pre-configured personal processing terminal.

State of the art

The invention falls within the context of problems relating to the transfer of confidential information on a communications network (such as the Internet for example, but also a local network) and to security in accessing protected sites, or more generally services of various kinds, for which certain recognition of the user and the impossibility of access by unauthorised persons represent necessary and fundamental conditions for delivery of the service offered.

Examples which readily come to mind include on-line banks, sites of companies which issue temporary credit card numbers, company or institutional mail servers containing extremely confidential and strategic information, sites which offer e-commerce services, and all the possible services to obtain which it is necessary to exchange personal, confidential and private information of potential interest for use by unauthorised third parties for unlawful purposes.

In general it may be said that the invention is of particular importance primarily in the e-business and e-commerce sectors, but it can also easily be extended for use in the sector of conventional banking operations and telecommunications, including the management of physical access to restricted or in any case controlled locations.

A typical connection procedure on a network between a user and a service provider in which confidential information is exchanged generally consists of four steps:

- keying in on a computer keyboard (or any other user interface device which allows data to be input) the information necessary to identify the party, such as for example the User Name and Password and/or a PIN; in this case the security that this information is kept secret can be guaranteed only by the user (or someone for the user) by checking his computer using antivirus software, port and process scanners or similar provisions;

- processing such information by the computer or an equivalent processing unit, in order to render it unintelligible to anyone not possessing the necessary lawful instruments (for example Security Certificates) to read them; in this case the secrecy of the data depends on the quality of the security procedures imposed by the service provider's server on the user's computer;

- transferring the information processed by the user to the provider's server, on the communications network (for example the Internet or an LAN (Local Area Network), or a cellular communications network); in this case the security of the data depends on the type of connection used and where appropriate on the managers of the network access service, and in the case of the Internet (on which the number of potential points for monitoring the information flow is enormous), controlling the security of insufficiently protected data is poor;

- re-processing of this information in the provider's server, in order to decipher the information received, previously processed and encrypted; in this step, the security of the data received depends only on the server, its administrators and the type of management used.

It must be stressed that, in principle, information of any kind which is transferred via the Internet can be intercepted by third parties and, even if with some difficulty, can where appropriate be deciphered.

To date, the most confidential information is transmitted and received in encrypted form. This is because encryption is judged to be the most reliable system in this type of communication.

The most widely used encryption system is RSA, also known as a two-key system: a public key and a private one. In practice, the recipient of a message or piece of information makes the key public to carry out encryption of the message, giving it to the sender of the message and anyone who requests it. However, this key is not sufficient to decode the message received. To do this, a second key is required, a private one, which the recipient keeps hidden for himself alone.

In this system, the preceding four steps may be summarised as follows:

- information keyed in by the user (sender);
- encryption by means of suitable software installed on the sender's computer;
- encrypted data sent to the recipient's server;
- data received and decoded by the recipient's server.

In reality, the operation of unlawful decoding is not impossible, but requires a very long time to carry out. In general, it is sufficient for the decoding time to be longer than the period of validity of the protected information.

What has been said suggests that:

a) even if the encrypted information cannot be decoded in a sufficiently short time, this does not prevent the possibility of gathering and cataloguing a sufficient number of pieces of information (for example encrypted Passwords) over a period of time, and being able on the basis of this to work back to the algorithm which produced this information;

b) no cryptographic code is unbreakable; this is due to the ever increasing speed of computers and the possibility of bringing to bear on the same objective the results of calculations produced by a potentially very large number of computers connected to each other in a network (for example by means of the Internet).

Apart from this, there are at least three further problems which limit security when transferring even encrypted data over the Internet.

1) It is possible to find a way in between two parties or computers which are exchanging information using the two-key system: an intruder sends the message sender his public key, making him believe that it is the recipient's; the sender sends the message encrypted with this key, and the message is then decoded by the intruder by means of his private key. The same intruder then proceeds to send the recipient the sender's message encoded with the recipient's public key. In this way, the sender and the recipient are under the illusion that they are communicating in a protected manner, but in reality everything takes place under the control of the intruder.

2) There are some forms of computer virus in circulation, generally transmitted by means of electronic mail, which lie in wait in the memory of the sender's computer and are activated only when the operating system carries out the standard procedure of entering a User Name and a Password. When this happens, the virus programme reads and records directly what is typed on the keyboard, before this information reaches the stage of encryption to be dispatched. Once recorded, this information may subsequently be dispatched, still via the Internet, to a specified address. The speed of spread of these types of virus, and the difficulty of removing them because of their specific characteristics, makes this problem quite difficult to solve.

3) A further possibility is that an intruder may manage to insert in the computer being spied upon programmes capable of reading and recording all the characters typed on the keyboard of that computer, and therefore including any passwords, and to dispatch them to wherever required. As in the previous case, this would all take place prior to any encryption stage, which would therefore not provide any real protection.

From what has been said it will therefore be understood that encryption alone, however much it may complicate the process of unlawful appropriation of personal information by unauthorised third parties (described generically as hacking), may sometimes be inadequate to protect such information, and also requires continuous updating and increases in complexity because of the continuing growth in the computing power of computers and also in the quality and effectiveness of techniques of eavesdropping to obtain sensitive information.

In support of this it is in fact said that there are some techniques already in use to reduce the risk of hacking (attempting at the same time not to make the operations to be carried out by the user too complicated).

United States patent US 4 720 860 describes a method and a system for generating variable codes, non-predictable, for the purpose of identifying a party authorised to carry out monetary transactions or access a protected system. Secure identification of the party is based on a comparison of a pair of non-predictable access codes generated as a function of a static variable and of a dynamic variable defined by the moment in time at which the static variable is input into the system by the user.

A method and a system for recognition of a party by means of non-predictable codes is also described in US 4 998 279, in which a high degree of security is achieved by combining the system in US 4 720 860 for generating non-predictable codes, variable in time, with the communication at the same time of a biocharacteristic of the user, for example the sound of the user's voice.

US 5 367 572 describes a method and a system of recognition for identifying a party on the basis of a PIN, in which the PIN is transmitted in combination with an non-predictable time-dependent code. At a recognition centre, the PIN and the non-predictable code are retrieved on the basis of a non-secret code transmitted previously.

US 6 130 621 relates to a method and a system for preventing unauthorised access to or use of a protected device, in which a non-predictable dynamic code is used, generated by the user for example on the basis of a card or other similar identifier ("token") in his possession.

Some examples adopted in current practice are:

<u>Access to the sites of some on-line banks, such as Nat-West (http://www.natwest.com)</u>

In this specific case, the Personal Identification Number (PIN) and the access password are not required in their entirety, only a part of them being sent over the network (some numbers or letters of which they are composed) following the instructions given by the connecting software (requests such as: "send the second, first and fourth numbers of the PIN", "send the eighth, third and thirteenth letter of the password" and so on). The instructions change for each new connection.

In this case, the purpose is to avoid transferring all the information over the network in a complete manner, by asking for only a part of it to be sent, in an attempt to make complete reconstruction of the information by unauthorised third parties more difficult, on the assumption that the latter might be capable of reading or in any case interpreting the information and the requests which the sender (the User) and the recipient (the Bank) are exchanging.

Despite this, however, it is easy to understand that the further obstacle set up by the bank, again with respect to encryption alone, may be circumvented by unauthorised third parties simply by collecting a number, not even a large number, of partial pieces of information on the sender and the recipient's requests with which to reconstruct the complete initial information, which in any case always remains the same.

In practice, after a certain number of connections, the complete information will be transferred over the network and can therefore be known.

<u>The SECURE ID system produced by RSA Security (http://www.rsasecurity.com)</u>

This is a system based on an electronic device which generates numbers by means of an algorithm which depends on a static variable and a dynamic variable.

A static variable may for example be a "once only" number to be entered to initialise the algorithm, while the dynamic variable is the time.

In practice, with such a system, the user wishing to be connected to its site containing confidential information must enter his own User Name, a password if any (both these pieces of information are fixed), and in addition a number (which we may call TDN) supplied to him by the electronic device on a display and which changes every minute.

The server which the user is accessing, once the user is identified by means of his User Name (and password if any), calculates the TDN using the same algorithm (known to the server) present in the user's electronic device, using the same static variable previously exchanged with the user to initialise the algorithm, and using a clock synchronised with that of the user to determine the time variable. If the user's TDN and that of the server coincide, access to the server is permitted.

The fundamental purpose of the system is to prevent access to a server depending only on predetermined and fixed information (even though encrypted), which, as has been said in points a) and b) set out above and by means of any one of the methods described, for example in points 1), 2) and 3), can be picked up or in general known by unauthorised third parties.

For this reason, a piece of information varying with time is added, known only to the holder of the electronic device and the server.

This precaution does not however appear very effective in principle. This is because, if it is assumed that any information travelling through the network can be seen by third parties, the TDN numbers generated by the electronic device can also be seen. In this case, the TDNs could be catalogued a piece at a time as they are picked up on the network and correlated with the time variable, thus making it possible to obtain all the necessary information to be able in principle to work back to the algorithm and the static variable which generated these TDNs, and therefore to be able to predict the following ones.

The system in question, therefore, only increases the complexity of the hacking process, without solving the problem in principle. This is due to the fact that on the network all the information is transferred in a complete form, even though encrypted. In this case too, in practice, it is still only the encryption which guarantees the security of information transfer over the network.

<u>MONETA on-line Service (http://www.monetaonline.it), offered by the Intesa BCI banking group</u>

This is a service by means of which it is possible to obtain temporary virtual credit card numbers corresponding to a specific amount. In this way, the credit card number which is transferred over the network cannot be used by unauthorised third parties who might come into possession of it by unlawful means, first of all because it corresponds to an amount which is quite specific and relates only to the purchase which it is intended to make at that time, and then because its duration in time is extremely limited (in general 24 hours).

The person entitled to the MONETAonline service, after selecting the item or service to be purchased on-line, accesses the site www.monetaonline.it to ask for the number of the VISA virtual credit card to be entered on the order form awaiting completion.

In summary, the steps to be followed to make a payment are the following:

- select the item or service from an on-line business having an arrangement with VISA or MONETA, proceeding as far as the order form where the user is requested to enter the number of the credit card and the relevant expiry date;

- access the site www.monetaonline.it;
- select the function "Request Virtual Card for payment";
- enter the user code and the password, select the type of Virtual Credit Card required and where appropriate complete the optional maximum amount box;
- when the number of the card and the expiry date have been obtained from the service manager, return to the order form, select the payment by VISA or MONETA card option;
- enter the number of the card and the expiry date;
- confirm the order and await the on-line reply from the sales operator.

Although the virtual credit card system does in fact represent an excellent deterrent against the theft and associated use of "real" credit card numbers (to distinguish them from the "virtual" numbers mentioned), because it is impossible to re-use them once the authorised holder of the virtual credit card number has completed his own operation, the service still proves to be imperfect and ineffective because of the fact that to access the site on the Internet it is necessary to enter a user identification code and a password, and this information, as stated, still presents security problems as pointed out in points a), b) and 1), 2) and 3) above.

Therefore, the use of the virtual credit card service is still subject to the cited disadvantages when transferring confidential information over the network.

All the services described above, as well as other similar ones (see for example the secure on-line payment service for commercial transactions on the network provided by the company Orbiscom, http://www.orbiscom.com), demonstrate among other things that in reality confidence in the effectiveness of encryption and in general in network security is rather low. This is due basically to an awareness of the fact that encryption systems are intrinsically vulnerable to being attacked and broken (even though with serious difficulties) and this represents one of the limiting factors in the development of e-commerce, e-business and in general all virtual payment systems or systems for transferring personal or confidential information.

Summary of the invention

The present invention has therefore the intended purpose of supplying a satisfactory solution to the problems set out above, avoiding the disadvantages of the prior art. In particular, the invention has the aim of guaranteeing absolute and intrinsic security of the information giving access to protected and confidential sites, and more generally to provide identification of the user party who needs to be recognised before being able to access services for which security and confidentiality represent essential conditions for provision of the service (for example, e-commerce sites, on-line banks, payment systems, electronic mail servers etc.), or to restricted or at any rate controlled areas.

A further purpose of the invention is also to guarantee the security, absolute and intrinsic, of all the information exchanged between the user and the servers of protected and confidential sites (for example e-mail texts, credit card numbers, information on bank accounts etc.).

According to the present invention, this purpose is achieved by means of a method for the identification of an authorised party, having the characteristics cited in claim 1.

A further subject of the invention is a system for the identification of an authorised party, having the characteristics claimed in claim 22.

In summary, the present invention is based on the principle of identifying an authorised party on the basis of an item of information of the fixed type (which may be the User Name), and on "one-time" passwords, that is passwords which can be used once only for a single connection, intrinsically non-predictable since they are based on random numbers and on transferring only part of the data necessary for identification onto the network.

These "one-time" passwords may also be used as "one-time" encryption keys in an encryption system with one, two or more keys, at each connection always guaranteeing a different encryption of the information exchanged.

Advantageously, the password - or encryption key - is generated on the basis of a dynamic variable which is a function of the number of connections n between the customer/user and the provider which have previously taken place, and this variable may also be changed by the user, and therefore in that sense is not predictable.

Appropriately, the system may be initialised by means of an initialising procedure which not only enables synchronisation of the connections (respective knowledge of the number of connections which have taken place) to be recovered in case of problems during a connection (and therefore as such is an "emergency procedure"), but also enables the value of the dynamic variable relating to the number of accesses to be varied in a discontinuous and non-predictable manner, frustrating any unauthorised third-party who might be following the history of the connections of a specific user (and therefore, in this sense, is also a "preventive procedure").

Moreover, in the procedure an algorithm is used for extracting a limited part of more extensive and complete information, and this characteristic guarantees the non-reversibility of the entire identification procedure, and therefore its intrinsic non-predictability even on the basis of statistical methods, because part of the information to be provided disappears in one step of the procedure.

The method of connection and identification (or "communication algorithm") in question is not considered as an alternative to encryption, but may supplement it and can easily be inserted in currently used connecting systems, as a further and definitive protection during access, which is found to be the most susceptible stage.

The communication algorithm, if used to generate "one-time" encryption keys, contributes to improvement of current encryption systems which thus become "one-time" encryption systems.

With the method and system disclosed by the invention, the information transferred through the network, should it be intercepted and deciphered, would not in any case be of any use to anyone wishing to attempt to gain illegal access to the site to which the connection is made. In principle, in fact, this information could be transferred directly "in clear" without anyway running any risk deriving from possible interception. In other words, the method and the system according to the invention guarantee an absolute level of security in access to web sites which provide for the entry of a password, as will be understood below.

Implementation of the invention is based on standard technology and no modifications are required either to the hardware or to the Internet navigating software, that is there is no need to change any of the standards used hitherto for this type of communication. In practice, it is necessary to have a microprocessor card or Smart Card and an associated portable read/write device (or an equivalent electronic device), and also suitable software installed on the server of the site to which the connection is being made. An additional possibility is to integrate the read/write device of the card with a palmtop computer or with a cellular telephone, possibly as an external accessory to these latter units. Further developments are offered by integrating technologies for biometric identification of the user (holder) in the read/write device of the card.

Brief description of the drawings

Other characteristics and advantages of the invention will be set out in more detail in the following detailed description of an embodiment of the invention, given by way of non-limiting example, with reference to the appended drawings, in which:

figure 1 is a block diagram of the method of identification according to the invention; and
figure 2 is a block diagram of an initialising stage of the method in figure 1.

Detailed description of the invention

A generic telematics network architecture (LAN, MAN, WAN, up to the Internet world wide web) configured for access by a user to a service provided on the network makes provision for both the provider party and the user party to be each provided with respective electronic data/information communications and processing systems.

In particular, at the service provider there is located a processing system such as a server capable of managing a procedure for identification of a party authorised to operate with the provider and to define an encryption system, if any, to be used in the communication, and also to deliver the serviced requested once recognition has taken place. The user accesses the network via an interface device comprising a processing terminal or similar device designed to allow identification of the authorised party in order to obtain clearance to operate.

Description of the user terminal

According to a preferred embodiment, the user's processing terminal basically comprises an electronic card reading device, such as for example a microprocessor card or Smart Card, and a processing unit capable of executing the programmes stored on the card.

Preferably, it is provided with a non-volatile memory in which the service provider (who at the same time has supplied the client with the identification device) has written an identification number (DEVID) and a string (STRID) which identify the device and therefore the holder to whom it belongs, and whose relevance will become clear further on.

The terminal is equipped with at least one alphanumeric display for presentation of the single-use passwords generated as and when there is a request to use a service on the network, and also with a selection, setting and control keypad including, for example, push-buttons marked with the numbers 0-9 for inputting the data requested in the identification procedure, and an additional push-button for starting a procedure to initialise the system.

The terminal may also be provided with a communications port (with infra-red or radio wave operation, for example, but also of the USB, serial or optical type etc.) to allow direct connection where appropriate to a Personal Computer (PC) to automate the procedure for accessing the network without manual intervention by the holder.

A similar device, without a keypad or display, but simply capable of executing programmes with the algorithms present on the card and provided with a DEVID and a STRID could also be inserted directly into a computer in the form of a PCMCIA card or similar, for example.

Preferably, the external Smart Card which can be inserted into the reading device of the user terminal comprises rewritable non-volatile memory modules containing information on a PIN access code (PINSC) necessary to read the card, which must be known only by its holder, and also all the algorithms necessary for execution of the programmes by the device, the number of accesses or access attempts which have previously taken place, an initialising table and any variables necessary for connection. The functions assigned to the number of accesses and the initialising table will become clear to the reader from the remainder of the description and in particular from the complete description of the steps in the identification method.

As an alternative to using a PIN access code, the portable device and/or Smart Card may be activated by means of biometric identification of the holder, for example by recognition of his fingerprint. In this case, the portable device is conveniently equipped with a biometric data reader, such as a scanner for acquisition and recognition of fingerprints. Preferably, the biometric data relating to the authorised user are stored only in the reading device or on the Smart Card and are not transmitted in any way over the network, avoiding any problems connected with possible privacy violations.

The use of biometric identification technologies ensures that the "one-time" passwords are generated exclusively by an authorised user, who is therefore identified unambiguously in the recognition process.

In practice, a card must be matched to the reading device intended to receive it, and therefore to its holder. The matching is conveniently carried out by the provider, or by service companies authorised by it for the operation.

The card stores the same user identification STRID present on the reading device. In this way, the reading device can check whether the card inserted is authorised for that particular reading device (and therefore holder) preventing the use of it by unauthorised third parties.

One or more algorithms stored on the card relate to the static variable DEVID present only in the reading device enabled to read that specific card. In this way a further guarantee of security is obtained, due to the fact that the strings generated by the above-mentioned algorithms will correspond only and exclusively to those which can be obtained from the unique reading device authorised to read them.

The choice of non-volatile memories (which are not deleted if the card is removed from the reading device and therefore no longer supplied with power) is necessary to allow the use of different cards, relating to various services offered by one or more providers, on the same device. Alternatively, everything described above may be incorporated within the processing terminal, without any need for removable cards.

Description of the method of identification

In the block diagrams in the drawings, the left column shows the state and the operations carried out by the server S which manages access to a predetermined service (for example an on-line bank). The column indicates the intermediate data known and/or calculated by the server for determining the single-use access password independently of the user, and for the comparison with the password made known by the user.

The right column shows the state of the user terminal C and the operations conducted by the party intending to access a service on the network, either in the form of operations carried out directly by the user via universal or personal interface devices, following the indications provided by the pre-configured processing terminal, or in the form of operations conducted automatically by the above-mentioned terminal incorporated in the interface device. The column indicates the intermediate data known and/or calculated for determining the single-use access password independently of the provider.

The horizontal arrows show the direction of communication (requests for and sending of information), while the vertical arrows show changes of state as a result of calculating processes.

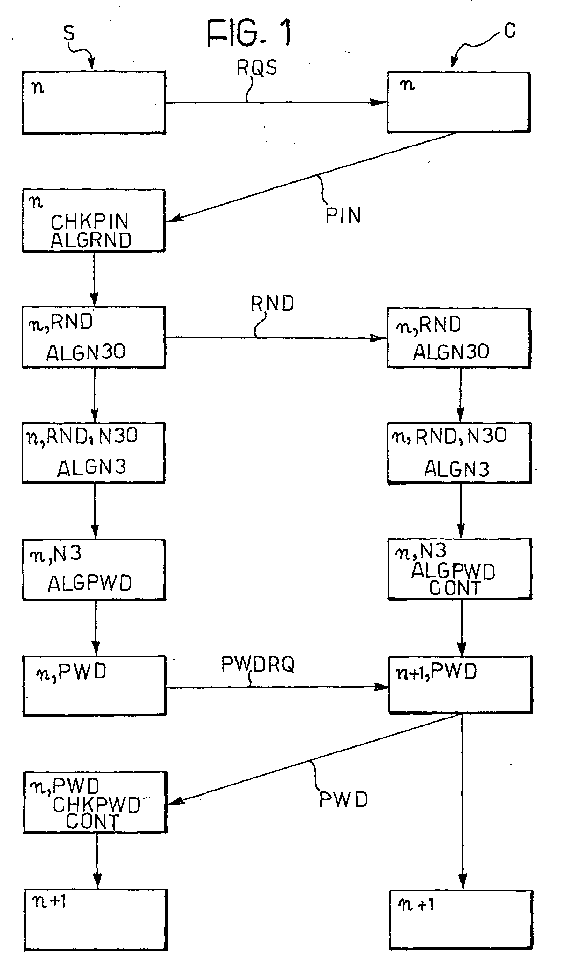

The procedure for identifying the user for access to the provider's protected server via a communications interface capable of carrying out simple calculating operations may therefore be described as follows (with reference to figure 1).

Before connection, both the provider's server S and the user terminal C retain in their memory the number n of connections made and concluded between the two parties up to that moment. This condition is shown in the drawing by the dynamic variable n in the box which shows the change of state and execution of the operations in the respective systems.

When a request for connection is made by the user, the provider's server sends its request RQS to input a PIN identification string for the purpose of selecting the access data relating to the user corresponding to that PIN string. These data (for example a serial number of the terminal and an Initial User Code pre-selected by the user when activating the service) are personalised for the user and constitute static variables on the basis of which the algorithms for final calculating of the "one-time" password (PWD) are personalised.

The user sends his own PIN in reply.

Using the CHKPIN procedure, the server S checks the existence of the identification PIN received, and if the result is affirmative initiates the access procedure.

As a first step, by means of a pre-determined algorithm for generating a random number ALGRND, the server generates the number RND. Thus, at this stage in the connection, the items of information contained in the memory of the server are: n and RND.

Once the number RND is generated, the server sends it to the user via the interface device (for example the screen of a personal computer by means of which the network is accessed or the display of the processing terminal) or, where appropriate, directly to his processing terminal, as in the case where the whole access procedure is automated by means of a direct connection, of whatever type, between the device and the personal computer used for the connection. In this way, the terminal C also contains the same information as the server (that is n and RND).

From this moment onwards, both at the server and at the user terminal, the same procedure may be started to generate the single-use password PWD.

This procedure begins with the generation of a string N30 by means of a predetermined string-generating algorithm ALGN30 which has as input data the value of the dynamic variables n, RND and the values of the static variables such as the serial number of the terminal and the Initial User Code selected when the service is activated. The string N30 is composed of a large number of characters (for example thirty, but the number of characters is non-limiting and may be chosen as large as desired and if required may also be dependent upon n).

The number of accesses n, notwithstanding its dynamic nature, also represents a variable personalised to the user, since it depends on the history of the connections made by the user, recorded both on the user terminal and on the server. The variable n is not sent onto the network, and therefore cannot be detected by unauthorised third parties, so that it may be considered a hidden dynamic variable. Preferably it consecutively increases its own value by one unit, but may vary according to other rules and may also be changed by the user in a random manner - as will be explained later - therefore becoming entirely non-predictable, so as to prevent the possibility of working back to it by any hacking operation conducted over time. Moreover, given that it must be updated at each connection both on the user terminal and on the server, it represents an intrinsic method of controlling authorised access to the server. Therefore n is a dynamic variable, invisible, non-predictable and controllable by the user, and differs greatly (and for the better) from the time variable used in known access systems (for example the SECURE ID system discussed previously and the systems described in the prior art patents cited).

The probability of predicting the string N30, in the absence of the lawful instruments for generating it, is practically nil, both because it is generated on the basis of random numbers and an unknown dynamic variable (the 2 above-mentioned variables are both non-predictable) and because N30 is never sent onto the network, and it is therefore not possible for it to be known, far less predicted.

Once N30 is generated, both in the server and in the user terminal the string N3 is generated by means of a predetermined extraction algorithm ALGN3. The algorithm has as inputs n, RND and N30, and as output string N3 which has a smaller number of characters, preferably less than half, than the number of characters in the string N30. N3 is a string which has the particular feature of being composed of a subset of characters of N30, and more specifically of characters extracted from those belonging to the string N30 in positions dependent upon n and RND.

For example, if N30 is the string:

3h5y987sfg82JsKl5wQ421fxjLpUMp

by means of the algorithm ALGN3, and as a function of the current n and RND, the characters

.h..9..sf.8.J...5.Q4..fx.L...p

are selected so that the string N3 extracted from N30 is:

h9sf8J5Q4fxLp.

In the example, the characters which make up N3 have been extracted keeping the consecutive order in which they are positioned in N30, but this condition may also be changed and the characters may be extracted in such a way as not to comply with the order in which they appear in N30. In fact, this order may itself also be a function of n and may therefore vary at each different access.

The extraction of N3 from N30 represents a fundamental aspect of the invention. This is because the operation, and the consequent loss of the information relating to N30 (it should be remembered that N30 is not sent onto the network, has a length which is not known beforehand and it is not possible to predict which characters are selected to extract N3), guarantees the non-reversibility of the whole process of generating the password PWD. In practice, even if it were possible for unauthorised third parties to read and record a sufficiently large number of passwords PWD which are sent onto the network (even "in clear"), and discover both the number n of connections made and the number RND, it is intrinsically impossible (and not simply improbable) to reconstruct in reverse the process of generating any password whatever and therefore to be able to predict a subsequent one.

What has been stated - this will be shown further on - is valid independently of the type of technique which may be used to reconstruct the process of generating passwords and of the computing power available. Even if it were conceivable to work backwards, from the known passwords PWD, to N3, it would not be possible to reconstruct N30 from N3 because a greater quantity of information than could be obtained in principle from N3 would be missing. This guarantees the total non-predictability of a password, even in conditions most favourable to any unauthorised third parties (for example, if all the static and dynamic variables and all the passwords PWD sent onto the network were known).

Once string N3 has been obtained, both the server and the user terminal calculate the actual password PWD by means of a predetermined algorithm for generating single-use passwords ALGPWD, on the basis of the input data n and N3.

Immediately after the generation of the password, the user terminal C updates the variable n by means of the procedure CONT, while this operation at the server S is carried out in a subsequent step. Thus, after the generation of PWD both at the server and at the user terminal, for the server the number of accesses made is still n, while for the user terminal it is n+1. Both the provider and the user nevertheless have the same information on the single-use password generated for the (n+1)th connection.

At this point, the server sends a request PWDRQ to the user to input the password PWD. The word PWD is input and sent by the user by means of the selection keypad (or equivalent system) of the processing terminal or by the terminal itself automatically. The provider's server checks the correctness of the password input by comparing, using the procedure CHKPWD, the variable PWD received with the internally obtained value.

If the password check gives a positive result, the server authorises access but otherwise denies it and where appropriate passes to an initialising procedure JOLLY (described below) which makes it possible to re-synchronise the dynamic variable relating to the number of accesses made.

There is a further case in which, for some reason, the user does not input any password, for example if he goes away from the terminal temporarily. In this case, n can be left unchanged by arranging a counter/timer on the server which cancels the operation if the password is not communicated within a certain time interval. In this way the user has only to repeat the normal connecting procedure, without having to make use of the JOLLY procedure.

Once access is authorised, the server updates the variable n by means of the procedure CONT to the value n+1, returning the system to the initial conditions waiting for a subsequent request for access and a subsequent identification procedure.

The JOLLY initialising procedure

If irregularities occur during the connection (for example input of an incorrect password by the user, interruption of the connection before it is completed, or other) or if, in general, for any reason, the variable n indicating the number of accesses which have taken place has a value stored in the user's processing terminal different from that stored in the provider's server, or again if it is desired to restore (reinitialise) the connection procedure (and therefore the variable n) for the purpose of preventing the traceability of the connections by unauthorised third parties, it is possible to use the JOLLY procedure.

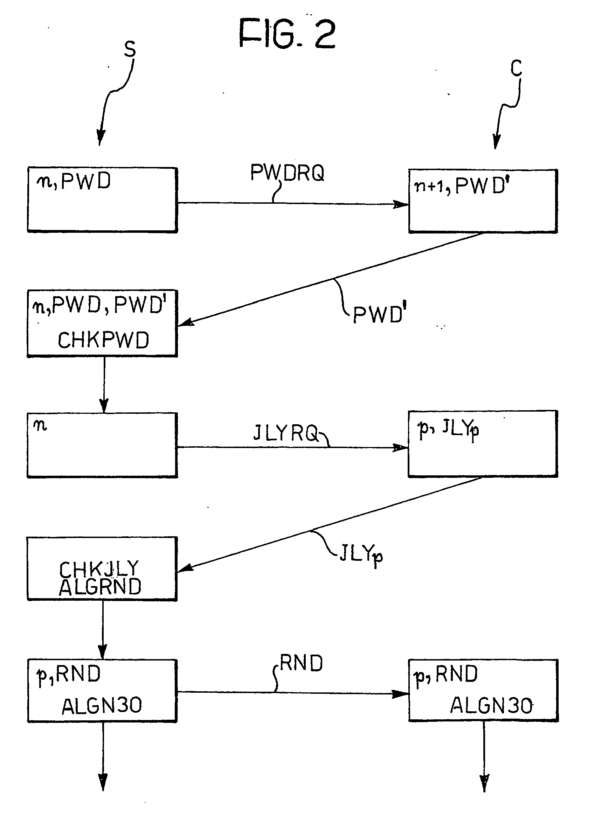

In what follows, with reference to figure 2, by way of example, the JOLLY procedure is described in the case where an incorrect password PWD is input.

As shown in the previous paragraph, after the provider's server S and the user terminal C have independently obtained the password PWD according to the procedure disclosed by the invention, the server sends a request PWDRQ to the user to input the password PWD. An incorrect password PWD' is input and sent by the user by means of the selection keypad (or equivalent system) of the processing terminal or by the terminal itself automatically. The provider's server checks the correctness of the password input by using the procedure CHKPWD to compare the variable PWD' received with the value PWD obtained internally, and the check gives a negative outcome.

At that moment, the state of the user terminal is such that the number of accesses stored and updated is n+1, while the state of the server is such that the number of accesses stored is still n.

The provider's server sends the user a request JLYRQ to input a jolly string $JLY_p$ relating to the (n+1)th connection, where p is the smallest integer greater than n+1.

A plurality of jolly strings is stored in an initialising table, in a non-volatile memory module of the card which can be inserted into the reading device of the user terminal. The initialising table is configured as a two-column table and is arranged and stored by the programmer of the card when it is created. An identical table is also stored in a memory unit on the provider's server, and relates only to an individual user. Every user will thus have his own initialising table, different from that of other users.

Of the two columns which make up the table, the first contains random strings $JLY_k$ (k=1,... m, where m represents the total number of strings making up the table, pre-established at the programming stage according to the degree of complexity which it is desired to assign to the system and the available memory), which are precisely the jolly strings to be input on request, while the second contains integer numbers p, not consecutive, arranged in ascending order. Each element of the column of jolly strings has one-to-one correspondence to one number only p, as shown in the following example.

| jolly string JLY | number p |
| --- | --- |
|  |  |
| 3Fv38q1p13 | 11 |
| B48sxnu3g | 27 |
| xmi30dq2 | 39 |
| 11sf8n31Cs | 55 |
| Mp249em67 | 69 |
| ... | ... |

The software controlling the user terminal C selects the first jolly string $JLY_p$ corresponding to the minimum value of p > n+1 as the jolly string to be transmitted over the network to the provider's server. At the same time, the terminal replaces in its memory the value of the dynamic variable, from n+1 - indicating the number of accesses which have occurred - to the number p corresponding to the string transmitted.

The server, once the jolly string $JLY_p$ is obtained, compares it with the strings $JLY_k$ (k=1,... m) present in its initialising table relating to the user connected (procedure CHKJLY to check the existence and the validity of a jolly string) and replaces the number of accesses n, updated at that moment, with the number p corresponding to the jolly string received.

This operation guarantees that at any time the server and the user terminal can be synchronised as far as the dynamic initialising variable or "number of accesses" is concerned.

To better describe what has been stated, the following example is proposed.

Be it assumed that after 30 consecutive accesses by a terminal to the server, some irregularity occurs (for example an incorrect password PWD is input for some reason). In this case, the server will request a jolly string to reinitialise.

The user terminal selects the first jolly string corresponding to a value p > n+1. In the table given above, this jolly string is the string "xmi30dq2" corresponding to p = 39. Once the jolly string is selected, the user terminal updates its own number of accesses to the value 39.

The server, once the string "xmi30dq2" is received and this string is recognised as a valid string, is re-initialised and prepared to consider the connection in progress as the 39th connection for the user considered.

When re-initialising has taken place, the server generates a random number RND by means of the algorithm ALGRND. Then, at this stage in the identification procedure, the information contained in the server memory is the updated number of accesses p and the random number RND.

The server then sends the user the random number RND generated, via the interface device or where appropriate directly to its processing terminal, as in the case in which the whole access procedure is automated. In this way, the user terminal too contains the same information as the server (that is p and RND), thereby the initial conditions for the connection have been restored.

From this time onwards, the procedure for generating the single-use password PWD described above can be started either at the server or at the user terminal.

Variants of the embodiment described

As far as the logic of the identification procedure described previously is concerned, possible variants relate to:

- the possibility of using the password PWD generated by means of the procedure described as a key for the encryption algorithm (with one, two or more public and private keys), which makes it possible to encrypt any information of any kind (for example texts, sounds, images, including fingerprints, iris images and biocharacteristic information) exchanged between the user and the service provider, in a different manner at each connection between these parties;

- the quantity and type of static and dynamic variables which allow the password PWD to be generated, and which are similar to those used in the preferred form of embodiment (for example for the purposes referred to a random number RND is similar to a random string, the number of connections concluded is similar to the number of connections successfully initiated, and so on);

- the increment rule for the dynamic variables, in particular of the variable n, for which such increment may occur in a non-consecutive and variable manner at each new connection, in whole steps or not, in a linear manner or not, as a function of other variables;

- the fact that the password PWD is dependent, in an unambiguous and different manner for each user, on the entire history of the connections between the user and server, for example due to the effect of the increment of the variable n not only as a function of the number of preceding connections successfully established, but also of the random number RND exchanged in the connection in progress (the history of the connections made by a user is therefore recorded on the server which stores the dynamic variables n, the numbers RND exchanged and the passwords PWD entered);

- the algorithms used in the individual steps described, which may be of any type provided that they perform the task indicated (where appropriate, the algorithms may be personalised to the user, for example by means of an initialising procedure with one or more fixed variables, unique to each user);

- the order in which some of the steps described can be carried out, while obtaining the same result;

- the formats and lengths of the numbers and strings used in the identification procedure and in the JOLLY initialising procedure, which may be different from those considered;

- the format and size of the initialising table, which may be of any type.

It is also pointed out that a procedure which would also be intrinsically secure could be that of using only and exclusively the initialising procedure to start the identification procedure, then inputting, after the PIN identification string, a jolly string so as to select the variable p associated with it.

This procedure does have disadvantages, however, such as for example the fact that the size of the initialising table (number m of jolly strings) is limited and therefore the table would be regenerated with a certain frequency, checking each time that there are not identical numbers for different users. This would involve having to send the card or the processing terminal of the user to the service manager, with substantial loss of time and money and increased complexity of the system and its management, all more so if the number of users is large.

An access procedure based only on initialising by means of the jolly strings does however represent a sub-case of the complete access procedure described.

As far as the user processing terminal is concerned, variants may relate to:

- the method of inserting and presenting the information relating to the connection (RND, PWD, ...), which may be done manually by means of the keypad and display of the terminal, or still manually by means of the keyboard and monitor of a personal computer or similar interface device, or by voice using voice recognition and audio messages, or again automatically via a connection of any type (by means of a serial port, USB, infra-red, using radio waves or again by optical means) to a personal computer and software resident in the computer to which the device is connected, or again by means of the keyboard and display of a palm-top computer or a fixed or mobile telephone, and so on;

- the circuitry arrangement of the reading device, with its volatile and non-volatile memories and its internal processor, which must be configured so that at minimum it performs its task;

- the type of card used, which may be of any kind, provided that the minimum structure described is present, which is needed for performing the operations described;

- the static and dynamic variables present in the memories of the reading device and the card, which may be of any type, length or nature, provided that they are similar to those mentioned previously and perform the same task;

- the location of the logic units (processor, memories etc.) and of the data/information necessary for generating the password and for the connection (that is the algorithms, the static and dynamic variables etc.) which have been divided between the reading device and the card as described, but which could also be divided differently (for example, each card could be completely autonomous both as regards the variables and the algorithms, and as regards the management of these and calculation of the password, leaving to the reading device only the task of inputting/displaying data and/or information and supplying power to the card);

- the type of reading device, which could be as described previously (that is which can be used manually and automatically by means of a personal computer) or of the PCMCIA card type, or which can be incorporated in (or adapted to) a palm-top computer or a cellular or fixed telephone, or again may have a biometric data reader such as for example, a scanner for reading fingerprints;

- the possibility of being able to insert multiple cards into the reading device at the same time, selecting them by means of a selector device provided inside the reader itself, so as to use the same reader for several services, without necessarily having to replace the smart card in the reader when a different service is chosen.

<u>Areas of application of the invention</u>

The areas of application of the invention are in general all those in which there is a requirement for certain identification of a party, in particular of a user by a service provider and/or encryption of the information exchanged between them. This means that both public sectors (organisations/authorities etc.) and private sectors may be involved, including the services which already use smart cards for recognition of the users and/or encryption algorithms (or security certificates) to ensure the secrecy of the information exchanged.

Just some examples of possible applications are given below.

1) E-banking

The user must have an account open with a bank which also provides on-line services.

When the account is opened, the bank may offer the service of secure connection to its own on-line services and the assurance that no unauthorised outside party can read the information exchanged between the user and the bank. To do this, in addition to having made technical arrangements (that is having implemented on its own site the secure connection system disclosed by the invention), the bank will take steps to provide the user with the terminal having a reading device and/or personal smart cards programmed for the user. In this way, the user will be able to connect to the bank's on-line services in the secure manner described, and carry out all desired operations.

If the bank is prepared for the service, the user may also request temporary virtual credit card numbers (as described in point III above), the amount of which will be charged to the account which he holds with that bank. Such temporary credit cards may also then be used in a secure manner for purchases on e-commerce sites.

2) E-commerce

The user has at least two types of access and payment for goods purchased on the Internet.

The first highly versatile one consists in sending the manager of any e-commerce service existing in the world (and which accepts credit cards for payment), the numbers of (temporary) virtual credit cards as described in point III above. In this case, security would be guaranteed by the on-line bank to which a secure connection is made to obtain this credit card number (see point III above and e-banking).

The second type of access and payment consists in the user registering with an approved e-commerce site which markets one or more categories of products in which the user may be interested (for example a virtual supermarket, a site which markets High-Tech products, virtual Computer Shops etc.). When registering, the user must, in addition to his own personal data, also communicate (possibly using conventional procedures) the details for payment and invoicing (for example the number of his own current account and the credit card number).

This system is already used in various situations and is totally secure because it provides for the transfer of partial information through different channels to the manager, which will ensure that they are secure. Against it is the fact that it provides for rather lengthy times for each registration, but in the case in question it has to be carried out only once for each e-commerce site selected.

When registration has been carried out, the service or site manager provides the user with the terminal having a reading device and/or the smart card relating to the service offered.

In this way, the user will be able to connect to the service in question whenever he wishes without sending any information attractive to or usable by unauthorised third parties via the network.

Once certain recognition of the user by the service manager has taken place, the user may purchase an item or service, and for payment to be made, the manager will use the information previously sent to the user at the time of registration.

3) Cash machines

Cash could be withdrawn from appropriately prepared cash machines (or in general any ATMs) by means of exactly the same procedure used for connecting to an on-line banking site.

The user keys in his PIN on the cash machine keypad which is connected to the Bank, which in turn sends the number RND which appears on the cash machine display.

Manually or by means of any other system, the user then enters into his own terminal the number RND received, obtains the password PWD from his own terminal and keys it in on the keypad of the cash machine, which checks its validity with the Bank and in the affermative allows access to the cash ma chine service and all functions available on the machine.

4) Payment to approved businesses

Once an item or a service is purchased from a shop, payment may be made in at least two different ways.

In a first method, the user must be in possession of the device and the relevant card, and the shop must be entitled to connect to the bank or its service company which issues virtual credit card numbers. In this case too the connection is made in a manner similar to that described previously (see cash machines for example), with the only difference that, once the connection is obtained, the bank (or someone on its behalf) sends details of the virtual credit card generated and relating to the expenditure incurred by the user with the above-mentioned shop.

A second method provides instead for the use of a cellular telephone. Once the item to be purchased has been selected, the PIN is sent by means of a first message SMS to the number supplied by the reference bank. The bank's management system sends the sender's number an SMS containing the number RND. The user types in this number on his terminal, obtains the password PWD, and then sends the bank a second SMS containing this PWD and the amount of the purchase to be made. The bank then sends back to the user an SMS containing the number and all the details of the virtual credit card created for him in relation to the amount required. This information on the virtual credit card can then be communicated to the manager of the shop, allowing the due payment to be made.

It is stressed that the system comprising a user terminal and a cellular telephone may in any case also be used to obtain virtual credit card numbers for purchases using different methods (for example via the Internet, as already described).

Clearly, there is also the possibility that all what has been described may be carried out using only a telephone which has the capability of managing a smart card in the same way as the reading device of the user terminal, simplifying the operation by using the keypad and the display of the telephone itself.

5) Access to protected sites and e-mail servers

In this case too, the connection procedure is exactly the same as that described in the previous points.

The user, possessing his terminal and the associated smart card, when requesting connection to the site or to the server, enters his PIN number. The site (or server) sends the user the RND, which is entered into the user terminal to generate the password PWD. The user then types in the password PWD and accesses the system.

Alternatively, the password may be entered and used as a key for an encryption algorithm. This algorithm provides for encryption of the password too, which may be sent thus encrypted to the server which decodes it and authorises (or denies) access accordingly. If access is authorised, all other information exchanged between the user and server is encrypted using the same algorithm, initialised by means of the password relating to this connection.

It is worth stressing that in this case too, as in all cases in which a personal computer is used for the connection, the user's processing terminal may where appropriate be connected directly to the computer and managed by this by means of suitable software which is responsible for transmitting the data between the terminal and the computer, with no manual intervention by the user.

6) Mobile banking

The recognition system described may also be extended to connecting to banks by means of cellular telephones and communications networks which use a suitable communications protocol (of the WAP, GPRS or UMTS type).

The procedure of identifying the user party is still the same, but uses the cellular telephone network and a commercially available cellular telephone.

In practice, a connection is set up to the site (for example, the WAP site) of the bank and the PIN is entered using the keypad of the cellular telephone. Then, once the number RND has been received from the bank's site, this number is entered into the terminal and the password PWD is obtained which will then be sent to the WAP site, still using the keypad of the cellular telephone. Once access is obtained, the user can navigate around the site to which connection has been made.

Of course, this procedure may be applied to all sites accessible via the cellular telephone network, for which it is essential to have certain knowledge of the identity of the user.

Moreover, the same procedure could be made easier if the cellular telephone were arranged to read and manage smart cards of the type described, in which case the user's processing terminal would be incorporated in the cellular telephone and to use it the keypad and display of the telephone itself would be employed.

7) Controlling access by personnel

The recognition system described may also be extended to controlling access by personnel to offices/businesses or, in general, to areas prohibited to unauthorised persons (in which case the service delivered is represented, by extension, by permission to access).

The portable user terminal, equipped with a device for reading biometric data and "one-time" password generating software may advantageously be used to control access by personnel as a replacement for the common validation cards. The combination of the functions of biometric recognition and single-use password generation means that identification of the card's authorised holder is absolutely unambiguous.

More generally, the combination of the characteristics of biometric identification of the terminal holder and the fact that the passwords PWD are dependent in an unambiguous manner different for each user, on the entire history of the connections between the user and the server, makes the system suitable for fingerprint identification of persons. The fact that the history of the connections is unique to a given subject identified by his fingerprint, that the individual passwords are dependent on the whole history of the previous connections and that the data relating to the connections are retained on the server means that a party cannot deny the access to the server. On the other hand, he can demonstrate that he was not involved in any access which may have occurred unknown to him, since the portable terminal generating the passwords retains a memory of the data relating to a predetermined number of the latest connections.

The examples described are only some of the possible areas of application of the method and the system according to the invention, the number of services in which a user must be identified with absolute certainty being very large.

It is pointed out that the applications of e-banking, e-commerce, cash machines, payments to approved businesses in the first method and access to protected sites and e-mail servers all require the use of the same unique user terminal, with a single or various smart cards according to individual requirements. On the other hand, the applications of payments to approved businesses in the second method and of mobile banking also require the use of any telephone (for example a cellular terminal) of the type long available on the market and therefore without any addition of non-standard hardware.

Advantageously, it is possible to provide a telephone (fixed or mobile) arranged to read the particular type of smart card provided by the manager of the service which it is wished to use.

Considerations regarding the security of the procedure and of the system according to the invention

Below, some examples and considerations are given to assist in understanding how the system disclosed by the invention is intrinsically secure.

First of all, definitions are given of some quantities useful for the discussion which follows:

1 = length of the string N30;
m = number of characters in the string N30 which are omitted in the procedure for generating the password PWD (clearly m < 1) ;
s = number of possible values (alphanumeric) which the characters of 1 can assume;
k = number of data sent over the network (PWD + RND).

For the sake of simplicity, it is assumed that all the information relating to the connection is exchanged "in clear" between the user C and the server S, and that an attempt is made to decipher the algorithm for generating the single-use password.

The following will be sent over the communications network for each connection:

- a PIN;
- a random number generated by the server (RND); and
- a single-use password (PWD).

Therefore, on the most favourable assumptions for a hacker, the latter is capable of identifying the user being connected, part of the input data (RND) and the output (PWD) of the procedure.

The question now is to try to understand what actions might be taken to attempt to reconstruct the procedure and its algorithms.

For this purpose we may consider three cases, a first highly simplified case, a second simplified case, but closer to the actual case, and finally the actual case.

To enable numerical estimates to be made, an assessment is made of the number of data (PWD + related RND) which a hacker may succeed in collecting in a finite (but long) time as follows: considering a user who is connected on average ten times a day for about 30 years, the total number of connections will be around 100,000. In the second and third cases, this number is not essential for the subsequent considerations, and in practice k may be as large as desired without altering the substance of the conclusions given.

1) First case: $1=10$, $m=0$, $s=10$ (0,...,9), $k=10^5$

This is a highly simplified case which does not contain the mechanism of loss of information characteristic of the invention. It is useful for the purpose of estimating the difficulty of the action of a hacker in the most optimistic case imaginable.

It is assumed that the output strings, indicated here by the term N10 and coinciding in this case (there is no loss of information) with the PWDs, have a length $1=10$ and that the presumed hacker collects a number $k=10^5$ of these together with the related input data (which coincide in this case with RND, since dynamic input variables are not considered).

It is possible to carry out a numerical experiment to check directly the possible action of the hacker, and for this by way of example a simple algorithm ALGN10 generating the string N10 is chosen, based on the calculation of the sine of the input variable (multiplied by a constant a), that is:

$$\texttt{N10 = Sin[a RND]}$$

Thus, various input files have been generated and the output file (PWD) produced has been interpolated using the commercially available software MATHEMATICA®. In the majority of cases, the interpolating function obtained from the software did not succeed in predicting a new output value (outside the range of input values introduced). This also means that in some cases the prediction had positive results, that is that in this highly simplified case there is a finite probability of predicting a subsequent value of an output password outside the range of those interpolated.

It will be clear to a person skilled in the art that, in this case, the accuracy of the interpolation depends on the number of data available, so that theoretically a hacker will always be able to decipher the algorithm (even if this takes an extremely long time).

2) Second case: $s=10$, $10>m>0$, $1=10$, $k=10^5$

This case, also simplified, presents the loss of information mechanism characteristic of the invention.

It is assumed that the presumed hacker is still capable of intercepting $k=10^5$ data and that the input information (RND) contains no indeterminacy. The difference compared with the previous case is that now the output strings (N10) do not coincide with the passwords PWD which are intercepted by the hacker. Therefore the hacker must now reconstruct the algorithm (the entire procedure) starting from an incomplete set of data (PWD, RND).

A specific case is now considered in which m=1, so that in a manner not known to the hacker (since it depends on a dynamic variable which is in no way passed over the network) a character of the string N10 is eliminated.

Thus PWD will be a string of nine characters (more precisely of nine figures if s=0,...,9) and the hacker has available ten different possibilities for N10, for each position of the missing character (it is also assumed that the hacker knows that N10 is composed of ten figures!). It is clear that the number of possible combinations increases enormously when the number of the data collected is increased.

In the general case, assuming that the figures unknown to the hacker are m, there will be $s^m$ possibilities for each PWD to reconstruct N10, in the case where the positions of the missing figures (and the number of these) are known. In the case where the positions are not known, this number has to be multiplied by the possible arrangements of m items over k positions, that is for a binomial coefficient $\dbinom{k}{m}$.

The number of possible N10s differing from each other will be between $s^m$ and $\dbinom{k}{m} s^m$, because of possible repetitions in the combinations.

The case is now considered (in the hacker's favour) where the useful combinations are only $s^m$: then, for a number k of data (RND, PWD), the possible combinations (RND, N10) will be $s^{mk}$.

In the simplest case (m=1), the number is $10^{100000}$ data files on which to carry out interpolations (for each of them!). Assuming also that the presumed hacker possesses a machine with infinite computing power, he would be able to analyse the data and from them extract various interpolating functions using more or less sophisticated methods (for example he might exclude those which have large discontinuities). In every case, whatever the criterion adopted, there would still be a very large number of data which supply absolutely plausible functions and the choice between these would be dictated only by chance.

The probability of guessing the correct function from among these would be less than or at least comparable with that of guessing at random the correct password PWD (one possibility in $10^{10}$ in this case, for a PWD composed of 9 figures!).

3) Third case: actual case

With reference to the second case, the realistic situation in which a hacker might expect to operate would have the following differences:

- the length of the string (N30) is appreciably greater than that used in the previous example (N10), as well as possibly being dependent upon the dynamic variables, and is not known to the hacker;
- alphanumeric characters are used so that s is approximately equal to 30;
- m is equal to at least 15 (in the case of N30);
- for every PWD produced the order and the positions in which the figures which compose it are selected (starting from N30), and also the number of these, may be different, as a function of the dynamic variables; this involves a major difference compared with the previous case in which it was assumed that the figures composing the PWD would remain in the same order in which they were in N10;
- N30 in general is in turn a function of the dynamic variables; from this it follows that RND does not represent all the input data and the correlation between input and output (RND, PWD) for the hacker becomes minimal;
- the possibility of resetting or in any case changing one or more dynamic variables by means of the JOLLY procedure eliminates any possibility of discovering a correlation with these hidden variables;
- all the information exchanged between the user and the server does not necessarily have to be sent in clear, since it can be encrypted without interfering with the whole process.

In conclusion, from the considerations set out it can be easily understood how the loss of information contained in the method of identification disclosed by the invention is essential and can in no way be recovered by any unauthorised external operator.

Naturally, the principle of the invention remaining the same, the embodiments and details of implementation may be varied widely with respect to what has been described and illustrated purely by way of non-limiting example, without thereby departing from the scope of the protection defined by the appended claims.

**Claims**

1. A method for the identification of a party authorised to have the benefit of a service delivered by a provider party via a telematics network,
   in which said provider party is connected to the network by means of an electronic communications and processing system (S) capable of managing a procedure for identification of user parties authorised to operate with the provider,
   each user party being able to connect to the network by means of a respective electronic communications and processing system (C), and
   in which the provider party requests a temporary password (PWD) identifying the user party to allow the user access to the services delivered,
   **characterised in that**:

   upon request by the user party, one of said communications and processing systems (S; C) of the user party or of the provider party generates a random number (RND) by means of a predetermined algorithm for generating random numbers (ALGRND), and communicates said number (RND) to the other party via the network;

   **in that** it involves autonomous execution of a procedure for calculating the password (PWD) at the processing systems (S, C) of both parties on the basis of predetermined common algorithms, said calculating procedure comprising the operations of:

   generating a first string of characters (N30) by means of a first algorithm (ALGN30), on the basis of said random number (RND) and of a hidden dynamic variable (n; p) not transmitted over the network, but obtained from said processing systems (S, C) independently;
   extracting a second string of characters (N3), a subset of said first string (N30), by means of a second algorithm (ALGN3), as a function of said hidden dynamic variable (n; p) and of said random number (RND); and
   generating the temporary password (PWD) by means of a third algorithm (ALGPWD), on the basis of said second string of characters (N3),

   and **in that**
   identification of the authorised party takes place following the transmission to the processing system (S) of the provider party, of the password (PWD) calculated by the processing system (C) of the user party, and through subsequent comparison with the password (PWD) calculated by the processing system (S) of the provider party,
   so that access to the service is permitted if such comparison gives a positive result, and is otherwise denied.

2.  A method according to claim 1, **characterised in that** said hidden dynamic variable (n) indicates the number of connections between the user party and the provider party which have previously taken place.

3.  A method according to claim 2, **characterised in that** the processing system (C) of the user party updates said dynamic variable (n) by increasing by one or more units the value known to it subsequent to generation of the temporary password (PWD).

4.  A method according to claim 2, **characterised in that** the processing system (S) of the provider party updates said dynamic variable (n) by increasing by one or more units the value known to it subsequent to an operation of comparison between passwords (PWD) with a positive result.

5.  A method according to claim 1, **characterised in that** said hidden dynamic variable (n) is a function of the number of connections between the user party and the provider party which have occurred previously and of said random number (RND).

6.  A method according to claim 1, **characterised in that** said hidden dynamic variable (n; p) can be altered at the request of the user party via an initialising procedure.

7.  A method according to claim 1, **characterised in that** said hidden dynamic variable (n; p) can be altered at the request of the provider party via an initialising procedure started subsequent to an operation of comparison between passwords (PWD, PWD') with a negative outcome.

8.  A method according to any one of the preceding claims, **characterised in that** the generation of the temporary password (PWD) by means of said third algorithm (ALGPWD) is also conducted as a function of said hidden dynamic variable (n; P).

9.  A method according to any one of the preceding claims, **characterised in that**, upon a request for connection by a user party, the processing system (S) of the provider party requests from said user party an identification string (PIN) as a function of which to select one or more predetermined static variables.

10. A method according to claim 9, **characterised in that** said identification string (PIN) makes it possible to choose data (DEVID) relating to the processing system (C) of the user party and data predetermined by the user when activating the service.

11. A method according to claim 9, **characterised in that** it comprises the operation of checking the validity of the identification string (PIN) at the processing system (S) of the provider party, and in case of a negative outcome, access to the service is denied.

12. A method according to claim 9, **characterised in that** the generation of the first string of characters (N30) by means of said first algorithm (ALGN30) is also conducted on the basis of said static variables.

13. A method according to any one of the preceding claims, **characterised in that** the number of characters of said first string of characters (N30) is determined as a function of said hidden dynamic variable (n; p) and of said random number (RND).

14. A method according to any one of the preceding claims, **characterised in that** said second string of characters (N3) has a number of characters less than half the number of characters of said first string (N30).

15. A method according to claim 14, **characterised in that** the order of the characters forming said second string (N3) is different from the order in which they are presented in the first string (N30), their positions being dependent upon said dynamic variable (n; p) and said random number (RND).

16. A method according to claim 6 or 7, **characterised in that** said initialising procedure comprises the transmission to the processing system (S) of the provider party of an initialising string (JLY$_p$) selected by the processing system (C) of the user party from an initialising table previously stored independently in both systems (S, C).

17. A method according to claim 16, **characterised in that** said initialising table comprises two sets, respectively a first set including a plurality of strings of characters (JLY$_k$) and a second set including a plurality of integer numbers (p) in one-to-one correspondence with the strings of characters (JLY$_k$) of the first set.

18. A method according to claim 17, **characterised in that** said second set does not comprise consecutive numbers.

19. A method according to claim 17 or 18, **characterised in that** the initialising procedure comprises the steps of:

> selection by the processing system (C) of the user party of the string of characters (JLY$_p$) corresponding to the smallest integer number (p) greater than the current value (n+1) of the dynamic variable stored by the system (C);
> transmission of said string (JLY$_p$) to the processing system (S) of the provider party as an initialising string;

selection by the processing system (S) of the provider party, of the integer number (p) in the relevant initialising table, corresponding to the string of characters received (JLYp); and replacement of the current value of the dynamic variable (n+1; n) with the value of said integer number (p) in both processing systems (C, S) of the user party and the provider party.

20. A method according to any one of the preceding claims, **characterised in that** said first, second and third common algorithms (ALGN30, ALGN3, ALGPWD) may be personalised to the user party.

21. A method according to any one of the preceding claims, **characterised in that** said passwords (PWD) calculated autonomously by the processing systems (C, S) of the user party and of the provider party are supplied as keys to a predetermined algorithm for encryption of the subsequent communications between said parties.

22. A system for the identification of a party authorised to have the benefit of a service delivered by a provider party via a telematics network, for example to allow access to services of e-banking, e-commerce, withdrawal of cash or commercial transactions, access to protected web sites and to shared resources for the management of electronic mail, access to controlled areas, wherein:

said provider party is connected to the network by means of an electronic communications and processing system (S) capable of managing a procedure for identifying user parties authorised to operate with the provider,
each user party is able to connect to the network by means of a respective electronic communications and processing system (C), and
the provider party requests a temporary password (PWD) identifying the party requesting authorisation to allow access to the services delivered,

**characterised in that** the communications and processing systems (C, S) of said user party and provider party are arranged to carry out a method of identification according to claims 1 to 21.

23. A system according to claim 22, **characterised in that** said processing system (C) of the user party comprises an electronic processing, storage and communications terminal and a programmable electronic personalising module which can be linked to said terminal.

24. A system according to claim 23, **characterised in**

that said personalising module comprises a removable microprocessor card.

25. A system according to claim 23 or 24, **characterised in that** said personalising module includes at least one rewritable non-volatile memory unit, storing a dynamic variable (n; p) indicating the number of connections between the user party and the provider party which have taken place previously and an initialising table.

26. A system according to claim 25, **characterised in that** said initialising table comprises two sets, respectively a first set including a plurality of strings of characters (JLY$_k$) and a second set including a plurality of integer numbers (p) in one-to-one correspondence with the strings of characters (JLY$_k$) of the first set.

27. A system according to claim 26, **characterised in that** said second set does not comprise consecutive numbers.

28. A system according to claim 23, **characterised in that** said terminal comprises at least one non-volatile memory unit storing data identifying the terminal and/or the user party.

29. A system according to claim 25 dependent upon claim 24, **characterised in that** said at least one memory unit of the personalising module stores card identification data and the algorithms necessary to execute the method of identification by the terminal.

30. A system according to claim 29, **characterised in that** said processing terminal of the user comprises an electronic card reading device and a processing unit capable of executing the programmes stored on the card.

31. A system according to any one of claims 23 to 30, **characterised in that** said terminal can be incorporated in an interface device to a telematics network.

32. A system according to claim 31, in which said terminal can be incorporated in a telephone.

33. A system according to claim 31, in which said terminal can be incorporated in a palm-top computer.

34. A system according to claim 24, **characterised in that** said terminal is capable of receiving several cards and has means for selecting the card to be used.

35. A system according to any one of claims 23 to 34, **characterised in that** said terminal comprises display means for the presentation of the passwords generated and a keypad for selection, setting and control.

**36.** A system according to claim 35, **characterised in that** said keypad comprises keys marked with characters for inputting the data requested in the identification procedure and at least one push-button to activate a procedure for initialising the system.

**37.** A system according to any one of claims 23 to 36, **characterised in that** said terminal comprises a voice recognition device and a device for emitting audio messages.

**38.** A system according to any one of claims 23 to 37, **characterised in that** said terminal comprises a device for reading biometric data of the user party.

**39.** A system according to any one of claims 23 to 38, **characterised in that** said terminal is further provided with a communications port enabling it to be connected directly to an interface device to a telematics network.

**Patentansprüche**

**1.** Verfahren zum Identifizieren einer Person, die zur Nutzung eines von einer Anbieterperson gelieferten Services berechtigt ist, über ein Telematiknetz, wobei die Anbieterperson mit dem Netzwerk verbunden ist, und zwar mittels eines elektronischen Kommunikations- und Verarbeitungssystems (S), das in der Lage ist, einen Prozess zum Identifizieren von Benutzerpersonen, die zum Arbeiten mit dem Anbieter berechtigt sind, zu verwalten, wobei sich jede Benutzerperson mittels eines entsprechenden elektronischen Kommunikations- und Verarbeitungssystems (C) mit dem Netzwerk verbinden kann, und wobei die Anbieterperson ein temporäres Passwort (PWD) anfordert, das die Benutzerperson identifiziert, um dem Benutzer den Zugriff auf die gelieferten Services zu ermöglichen, **dadurch gekennzeichnet, dass**:

eines der Kommunikations- und Verarbeitungssysteme (S; C) der Benutzerperson oder der Anbieterperson auf Anfrage der Benutzerperson mittels eines vorbestimmten Algorithmus zum Generieren von Zufallszahlen (ALGRND) eine Zufallszahl (RND) hervorbringt und diese Zahl (RND) über das Netzwerk der anderen Person mitteilt;

wobei dies das autonome Ausführen eines Prozesses zum Berechnen des Passworts (PWD) in den Verarbeitungssystemen (S, C) beider Personen auf Basis vorbestimmter gemeinsamer Algorithmen zur Folge hat, wobei der Berechnungsvorgang die folgenden Operationen umfasst:

das Erzeugen einer ersten Folge von Zeichen (N30) mittels eines ersten Algorithmus (ALGN30) auf Basis der Zufallszahl (RND) und einer verborgenen dynamischen Variable (n; p), die nicht über das Netzwerk übertragen, sondern unabhängig von den Verarbeitungssystemen (S, C) erhalten wird; das Extrahieren einer zweiten Folge von Zeichen (N3), einer Teilmenge der ersten Folge (N30), mittels eines zweiten Algorithmus (ALGN3), und zwar als Funktion der verborgenen dynamischen Variable (n; p) und der Zufallszahl (RND); und das Generieren des temporären Passworts (PWD) mittels eines dritten Algorithmus (ALGPWD) auf Basis der zweiten Folge von Zeichen (N3),

und dass
das Identifizieren der berechtigten Person im Anschluss an die Übertragung des vom Verarbeitungssystem (C) der Benutzerperson berechneten Passworts (PWD) an das Verarbeitungssystem (S) der Anbieterperson und durch einen anschließenden Vergleich mit dem vom Verarbeitungssystem (S) der Anbieterperson berechneten Passwort (PWD) erfolgt,
so dass der Zugriff auf das Service gestattet wird, wenn ein solcher Vergleich ein positives Resultat hervorbringt, und andernfalls verweigert wird.

**2.** Verfahren gemäß Anspruch 1, **dadurch gekennzeichnet, dass** die verborgene dynamische Variable (n) die Anzahl der Verbindungen zwischen der Benutzerperson und der Anbieterperson, die zuvor stattgefunden haben, anzeigt.

**3.** Verfahren gemäß Anspruch 2, **dadurch gekennzeichnet, dass** das Verarbeitungssystem (C) der Benutzerperson die dynamische Variable (n) aktualisiert, indem es den ihm bekannten Wert im Anschluss an das Generieren des temporären Passworts (PWD) um eine oder mehrere Einheiten erhöht.

**4.** Verfahren gemäß Anspruch 2, **dadurch gekennzeichnet, dass** das Verarbeitungssystem (S) der Anbieterperson die dynamische Variable (n) aktualisiert, indem es den ihm bekannten Wert im Anschluss an eine Operation zum Vergleichen von Passwörtern (PWD) mit positivem Resultat um eine oder mehrere Einheiten erhöht.

**5.** Verfahren gemäß Anspruch 1, **dadurch gekenn-**

zeichnet, dass die verborgene dynamische Variable (n) eine Funktion der Anzahl von Verbindungen zwischen der Benutzerperson und der Anbieterperson, die zuvor stattgefunden haben, und der Zufallszahl (RND) ist.

6. Verfahren gemäß Anspruch 1, **dadurch gekennzeichnet, dass** die verborgene dynamische Variable (n; p) auf Anfrage der Benutzerperson durch eine Initialisierungsprozedur geändert werden kann.

7. Verfahren gemäß Anspruch 1, **dadurch gekennzeichnet, dass** die verborgene dynamische Variable (n; p) auf Anfrage der Anbieterperson durch eine Initialisierungsprozedur geändert werden kann, die im Anschluss an eine Operation zum Vergleichen von Passwörtern (PWD, PWD') mit negativem Ergebnis gestartet wird.

8. Verfahren gemäß einem der vorhergehenden Ansprüche, **dadurch gekennzeichnet, dass** das Generieren des temporären Passworts (PWD) mittels des dritten Algorithmus (ALGPWD) ebenfalls als Funktion der verborgenen dynamischen Variable (n; p) durchgeführt wird.

9. Verfahren gemäß einem der vorhergehenden Ansprüche, **dadurch gekennzeichnet, dass** das Verarbeitungssystem (S) der Anbieterperson bei einer Anfrage einer Benutzerperson nach einer Verbindung von der Benutzerperson einen Identifikationsstring (PIN) anfordert, um als Funktion davon eine oder mehrere vorbestimmte statische Variablen auszuwählen.

10. Verfahren gemäß Anspruch 9, **dadurch gekennzeichnet, dass** der Identifikationsstring (PIN) das Auswählen von Daten (DEVID) betreffend das Verarbeitungssystem (C) der Benutzerperson und von Daten, die vom Benutzer beim Aktivieren des Services zuvor festgelegt wurden, ermöglicht.

11. Verfahren gemäß Anspruch 9, **dadurch gekennzeichnet, dass** es die Operation des Überprüfens der Gültigkeit des Identifikationsstrings (PIN) im Verarbeitungssystem (S) der Anbieterperson umfasst, und dass der Zugriff auf das Service im Falle eines negativen Ergebnisses verweigert wird.

12. Verfahren gemäß Anspruch 9, **dadurch gekennzeichnet, dass** das Erzeugen der ersten Folge von Zeichen (N30) mittels des ersten Algorithmus (ALGN30) ebenfalls auf Basis der statischen Variablen durchgeführt wird.

13. Verfahren gemäß einem der vorhergehenden Ansprüche, **dadurch gekennzeichnet, dass** die Anzahl der Zeichen in der ersten Folge von Zeichen (N30) als Funktion der verborgenen dynamischen Variable (n; p) und der Zufallszahl (RND) bestimmt wird.

14. Verfahren gemäß einem der vorhergehenden Ansprüche, **dadurch gekennzeichnet, dass** die zweite Folge von Zeichen (N3) eine Anzahl von Zeichen aufweist, die weniger als die Hälfte der Anzahl von Zeichen in der ersten Folge (N30) ist.

15. Verfahren gemäß Anspruch 14, **dadurch gekennzeichnet, dass** die Reihenfolge der Zeichen, welche die zweite Folge (N3) bilden, sich von der Reihenfolge unterscheidet, in der diese in der ersten Folge (N30) vorliegen, wobei deren Positionen von der dynamischen Variable (n; p) und der Zufallszahl (RND) abhängen.

16. Verfahren gemäß Anspruch 6 oder 7, **dadurch gekennzeichnet, dass** die Initialisierungsprozedur das Übertragen eines Initialisierungsstrings ($JLY_p$), der vom Verarbeitungssystem (C) der Benutzerperson aus einer zuvor unabhängig in beiden Systemen (S, C) gespeicherten Initialisierungtabelle ausgewählt wurde, an das Verarbeitungssystem (S) der Anbieterperson umfasst.

17. Verfahren gemäß Anspruch 16, **dadurch gekennzeichnet, dass** die Initialisierungtabelle zwei Mengen umfasst, nämlich eine erste Menge, die eine Mehrzahl von Zeichenfolgen ($JLY_k$) einschließt, und eine zweite Menge, die eine Mehrzahl von ganzen Zahlen (p) in Eins-zu-Eins-Übereinstimmung mit den Zeichenfolgen ($JLY_k$) der ersten Menge einschließt.

18. Verfahren gemäß Anspruch 17, **dadurch gekennzeichnet, dass** die zweite Menge keine fortlaufenden Zahlen umfasst.

19. Verfahren gemäß Anspruch 17 oder 18, **dadurch gekennzeichnet, dass** die Initialisierungsprozedur die folgenden Schritte umfasst:

    das Auswählen der Folge von Zeichen (JLYp), die der kleinsten ganzen Zahl (p) entspricht, welche größer als der aktuelle Wert (n+1) der vom System (C) gespeicherten dynamischen Variable ist, durch das Verarbeitungssystem (C) der Benutzerperson;
    das Übertragen der Folge ($JLY_p$) zum Verarbeitungssystem (S) der Anbieterperson als Initialisierungsstring;
    das Auswählen der ganzen Zahl (p) in der relevanten Initialisierungtabelle, welche der erhaltenen Folge von Zeichen ($JLY_p$) entspricht, durch das Verarbeitungssystem (S) der Anbieterperson; und
    das Ersetzen des aktuellen Werts der dynamischen Variable (n+1; n) durch den Wert der ganzen Zahl (p) in beiden Verarbeitungssystemen (C, S) der Benutzerperson und der Anbieterperson.

20. Verfahren gemäß einem der vorhergehenden Ansprüche, **dadurch gekennzeichnet, dass** der erste, der zweite und der dritte gemeinsame Algorithmus (ALGN30, ALGN3, ALGPWD) für die Benutzerperson personalisiert werden können.

21. Verfahren gemäß einem der vorhergehenden Ansprüche, **dadurch gekennzeichnet, dass** die von den Verarbeitungssystemen (C, S) der Benutzerperson und der Anbieterperson autonom berechneten Passwörter (PWD) als Codes einem vorbestimmten Algorithmus für die Verschlüsselung der nachfolgenden Kommunikationen zwischen den Personen zugeführt werden.

22. System zum Identifizieren einer Person, die zur Nutzung eines von einer Anbieterperson gelieferten Services berechtigt ist, über ein Telematiknetz, beispielsweise um Zugang zu den Diensten von e-Banking, e-Commerce, zur Bargeldabhebung oder zu Handelsgeschäften, Zugang zu geschützten Websites und zu gemeinsam genutzten Ressourcen für die Verwaltung von elektronischer Post, Zugang zu Kontiollbereichen zu gewähren, wobei:

    die Anbieterperson mit dem Netzwerk verbunden ist, und zwar mittels eines elektronischen Kommunikations- und Verarbeitungssystems (S), das in der Lage ist, einen Prozess zum Identifizieren von Benutzerpersonen, die zum Arbeiten mit dem Anbieter berechtigt sind, zu verwalten,
    sich jede Benutzerperson mittels eines entsprechenden elektronischen Kommunikations- und Verarbeitungssystems (C) mit dem Netzwerk verbinden kann, und
    die Anbieterperson ein temporäres Passwort (PWD) anfordert, das die die Berechtigung anfordernde Person identifiziert, um den Zugriff auf die gelieferten Services zu ermöglichen,

    **dadurch gekennzeichnet, dass** die Kommunikations- und Verarbeitungssysteme (C, S) der Benutzerperson und der Anbieterperson dazu eingerichtet sind, ein Identifizierungsverfahren gemäß den Ansprüchen 1 bis 21 durchzuführen.

23. System gemäß Anspruch 22, **dadurch gekennzeichnet, dass** das Verarbeitungssystem (C) der Benutzerperson ein elektronisches Verarbeitungs-, Speicher- und Kommunikationsterminal und ein programmierbares elektronisches Personalisierungsmodul, das mit dem Terminal verknüpft werden kann, umfasst.

24. System gemäß Anspruch 23, **dadurch gekennzeichnet, dass** das Personalisierungsmodul eine herausnehmbare Mikroprozessorkarte umfasst.

25. System gemäß Anspruch 23 oder 24, **dadurch gekennzeichnet, dass** das Personalisierungsmodul zumindest eine wiederbeschreibbare nichtflüchtige Speichereinheit umfasst, die eine dynamische Variable (n; p) speichert, welche die Anzah1 von Verbindungen zwischen der Benutzerperson und der Anbieterperson, die zuvor stattgefunden haben, anzeigt, sowie eine Initialisierungstabelle.

26. System gemäß Anspruch 25, **dadurch gekennzeichnet, dass** die Initialisierungstabelle zwei Mengen umfasst, nämlich eine erste Menge, die eine Mehrzahl von Zeichenfolgen ($JLY_k$) einschließt, und eine zweite Menge, die eine Mehrzahl von ganzen Zahlen (p) in Eins-zu-Eins-Übereinstimmung mit den Zeichenfolgen ($JLY_k$) der ersten Menge einschließt.

27. System gemäß Anspruch 26, **dadurch gekennzeichnet, dass** die zweite Menge keine fortlaufenden Zahlen umfasst.

28. System gemäß Anspruch 23, **dadurch gekennzeichnet, dass** das Terminal zumindest eine nichtflüchtige Speichereinheit umfasst, die Daten speichert, welche das Terminal und/oder die Benutzerperson identifizieren.

29. System gemäß Anspruch 25 in Abhängigkeit von Anspruch 24, **dadurch gekennzeichnet, dass** die zumindest eine Speichereinheit des Personalisierungsmoduls Kartenidentifikationsdaten speichert, sowie die Algorithmen, die zum Ausführen des Identifizierungsverfahrens durch das Terminal notwendig sind.

30. System gemäß Anspruch 29, **dadurch gekennzeichnet, dass** das Verarbeitungsterminal des Benutzers ein elektronisches Kartenlesegerät und eine Verarbeitungseinheit umfasst, welche in der Lage ist, die auf der Karte gespeicherten Programme auszuführen.

31. System gemäß einem der Ansprüche 23 bis 30, **dadurch gekennzeichnet, dass** das Terminal in einer Schnittstellenvornchtung zu einem Telematiknetz eingebaut sein kann.

32. System gemäß Anspruch 31, wobei das Terminal in einem Telefon eingebaut sein kann.

33. System gemäß Anspruch 31, wobei das Terminal in einem Palmtop-Computer eingebaut sein kann.

**34.** System gemäß Anspruch 24, **dadurch gekennzeichnet, dass** das Terminal in der Lage ist, mehrere Karten aufzunehmen, und Mittel zum Auswählen der zu verwendenden Karte aufweist.

**35.** System gemäß einem der Ansprüche 23 bis 34, **dadurch gekennzeichnet, dass** das Terminal Anzeigemittel für das Darstellen der generierten Passwörter und ein Tastenfeld für Auswahl, Einstellung und Steuerung umfasst.

**36.** System gemäß Anspruch 35, **dadurch gekennzeichnet, dass** das Tastenfeld mit Zeichen **gekennzeichnet**e Tasten zum Eingeben der beim Identifizierungsvorgang angeforderten Daten und zumindest eine Drucktaste zum Aktivieren eines Prozesses zum Initialisieren des Systems umfasst.

**37.** System gemäß einem der Ansprüche 23 bis 36, **dadurch gekennzeichnet, dass** das Terminal eine Spracherkennungsvorrichtung und eine Vorrichtung zum Aussenden von akustischen Botschaften umfasst.

**38.** System gemäß einem der Ansprüche 23 bis 37, **dadurch gekennzeichnet, dass** das Terminal eine Vorrichtung zum Ablesen biometrischer Daten der Benutzerperson umfasst.

**39.** System gemäß einem der Ansprüche 23 bis 38, **dadurch gekennzeichnet, dass** das Terminal weiters mit einem Kommunikationsanschluss ausgestattet ist, welcher dessen direkte Verbindung mit einer Schnittstellenvorrichtung zu einem Telematiknetz ermöglicht.

**Revendications**

**1.** Procédé pour l'identification d'une partie autorisée à bénéficier d'un service délivré par une partie fournisseur via un réseau télématique,
dans lequel ladite partie fournisseur est connectée au réseau au moyen d'un système de communications et de traitement électronique (S) capable de gérer une procédure pour l'identification de parties utilisateurs autorisées à opérer avec le fournisseur, chaque partie utilisateur pouvant se connecter au réseau au moyen d'un système de communications et de traitement électronique respectif (C), et dans lequel la partie fournisseur demande un mot de passe (PWD) temporaire identifiant la partie utilisateur pour autoriser l'utilisateur à accéder aux services délivrés,
**caractérisé en ce que** :

lors d'une demande par la partie utilisateur, un desdits systèmes de communications et de traitement (S ; C) de la partie utilisateur ou de la partie fournisseur génère un nombre aléatoire (RND) au moyen d'un algorithme prédéterminé pour générer des nombres aléatoires (ALGRND), et communique ledit nombre (RND) à l'autre partie via le réseau ;

**en ce qu'**il implique l'exécution autonome d'une procédure pour calculer le mot de passe (PWD) au niveau des systèmes de traitement (S, C) des deux parties sur la base d'algorithmes communs prédéterminés, ladite procédure de calcul comprenant les opérations consistant à :

générer une première chaîne de caractères (N30) au moyen d'un premier algorithme (ALGN30), sur la base dudit nombre aléatoire (RND) et d'une variable dynamique cachée (n ; p) non transmis sur le réseau, mais obtenus à partir desdits systèmes de traitement (S, C) indépendamment ;
extraire une seconde chaîne de caractères (N3), un sous-ensemble de ladite première chaîne (N30), au moyen d'un deuxième algorithme (ALGN3), en fonction de ladite variable dynamique cachée (n ; p) et dudit nombre aléatoire (RND) ; et
générer le mot de passe (PWD) temporaire au moyen d'un troisième algorithme (ALGPWD), sur la base de ladite seconde chaîne de caractères (N3),

et **en ce que**
l'identification de la partie autorisée s'effectue après la transmission au système de traitement (S) de la partie fournisseur, du mot de passe (PWD) calculé par le système de traitement (C) de la partie utilisateur, et par l'intermédiaire d'une comparaison subséquente avec le mot de passe (PWD) calculé par le système de traitement (S) de la partie fournisseur, de sorte que l'accès au service soit permis si une telle comparaison donne un résultat positif, et est sinon refusé.

**2.** Procédé selon la revendication 1, **caractérisé en ce que** ladite variable dynamique cachée (n) indique le nombre de connexions entre la partie utilisateur et la partie fournisseur qui ont été effectuées précédemment.

**3.** Procédé selon la revendication 2, **caractérisé en ce que** le système de traitement (C) de la partie utilisateur met à jour ladite variable dynamique (n) en augmentant d'une ou plusieurs unités la valeur qu'il connaît à la suite de la génération du mot de passe (PWD) temporaire.

**4.** Procédé selon la revendication 2, **caractérisé en**

**ce que** le système de traitement (S) de la partie fournisseur met à jour ladite variable dynamique (n) en augmentant d'une ou plusieurs unités la valeur qu'il connaît à la suite d'une opération de comparaison entre mots de passe (PWD) avec un résultat positif.

5. Procédé selon la revendication 1, **caractérisé en ce que** ladite variable dynamique cachée (n) est fonction du nombre de connexions entre la partie utilisateur et la partie fournisseur qui se sont produites précédemment et dudit nombre aléatoire (RND).

6. Procédé selon la revendication 1, **caractérisé en ce que** ladite variable dynamique cachée (n ; p) peut être modifiée à la demande de la partie utilisateur via une procédure d'initialisation.

7. Procédé selon la revendication 1, **caractérisé en ce que** ladite variable dynamique cachée (n ; p) peut être modifiée à la demande de la partie fournisseur via une procédure d'initialisation démarrée à la suite d'une opération de comparaison entre mots de passe (PWD, PWD') avec un résultat négatif.

8. Procédé selon l'une quelconque des revendications précédentes, **caractérisé en ce que** la génération du mot de passe (PWD) temporaire au moyen dudit troisième algorithme (ALGPWD) est également conduite en fonction de ladite variable dynamique cachée (n ; p).

9. Procédé selon l'une quelconque des revendications précédentes, **caractérisé en ce que**, lors d'une demande de connexion par une partie utilisateur, le système de traitement (S) de la partie fournisseur demande à ladite partie utilisateur une chaîne d'identification (PIN) en fonction de laquelle sélectionner une ou plusieurs variables statiques prédéterminées.

10. Procédé selon la revendication 9, **caractérisé en ce que** ladite chaîne d'identification (PIN) rend possible le fait de choisir des données (DEVID) relatives au système de traitement (C) de la partie utilisateur et des données prédéterminées par l'utilisateur lors de l'activation du service.

11. Procédé selon la revendication 9, **caractérisé en ce qu'**il comprend l'opération consistant à vérifier la validité de la chaîne d'identification (PIN) au niveau du système de traitement (S) de la partie fournisseur, et dans le cas d'un résultat négatif, l'accès au service est refusé.

12. Procédé selon la revendication 9, **caractérisé en ce que** la génération de la première chaîne de caractères (N30) au moyen dudit premier algorithme (ALGN30) est également conduite sur la base desdites variables statiques.

13. Procédé selon l'une quelconque des revendications précédentes, **caractérisé en ce que** le nombre de caractères de ladite première chaîne de caractères (N30) est déterminé en fonction de ladite variable dynamique cachée (n ; p) et dudit nombre aléatoire (RND).

14. Procédé selon l'une quelconque des revendications précédentes, **caractérisé en ce que** ladite seconde chaîne de caractères (N3) a un nombre de caractères inférieur à la moitié du nombre de caractères de ladite première chaîne (N30).

15. Procédé selon la revendication 14, **caractérisé en ce que** l'ordre des caractères formant ladite seconde chaîne (N3) est différent de l'ordre dans lequel ils sont présentés dans la première chaîne (N30), leurs positions étant dépendantes de ladite variable dynamique (n ; p) et dudit nombre aléatoire (RND).

16. Procédé selon la revendication 6 ou 7, **caractérisé en ce que** ladite procédure d'initialisation comprend la transmission au système de traitement (S) de la partie fournisseur d'une chaîne d'initialisation ($JLY_p$) sélectionnée par le système de traitement (C) de la partie utilisateur dans une table d'initialisation précédemment stockée de manière indépendante dans les deux systèmes (S, C).

17. Procédé selon la revendication 16, **caractérisé en ce que** ladite table d'initialisation comprend deux ensembles, respectivement un premier ensemble incluant une pluralité de chaînes de caractères ($JLY_k$) et un second ensemble incluant une pluralité de nombres entiers (p) en correspondance bi-univoque avec les chaînes de caractères ($JLY_k$) du premier ensemble.

18. Procédé selon la revendication 17, **caractérisé en ce que** ledit second ensemble ne comprend pas de nombres consécutifs.

19. Procédé selon la revendication 17 ou 18, **caractérisé en ce que** la procédure d'initialisation comprend les étapes de :

 - sélection par le système de traitement (C) de la partie utilisateur de la chaîne de caractères ($JLY_p$) correspondant au nombre entier le plus petit (p) supérieur à la valeur actuelle (n+1) de la variable dynamique stockée par le système (C) ;

 transmission de ladite chaîne ($JLY_p$) au système de traitement (S) de la partie fournisseur comme une chaîne d'initialisation ;

sélection par le système de traitement (S) de la partie fournisseur, du nombre entier (p) dans la table d'initialisation pertinente, correspondant à la chaîne de caractères reçue (JLY$_p$) ; et

remplacement de la valeur actuelle de la variable dynamique (n+1 ; n) par la valeur dudit nombre entier (p) dans les deux systèmes de traitement (C, S) de la partie utilisateur et de la partie fournisseur.

**20.** Procédé selon l'une quelconque des revendications précédentes, **caractérisé en ce que** lesdits premier, deuxième et troisième algorithmes communs (ALGN30, ALGN3, ALGPWD) peuvent être personnalisés pour la partie utilisateur.

**21.** Procédé selon l'une quelconque des revendications précédentes, **caractérisé en ce que** lesdits mots de passe (PWD) calculés de manière autonome par les systèmes de traitement (C, S) de la partie utilisateur et de la partie fournisseur sont fournis en tant que clés d'un algorithme prédéterminé pour le chiffrement des communications subséquentes entre lesdites parties.

**22.** Système pour l'identification d'une partie autorisée à bénéficier d'un service délivré par une partie fournisseur via un réseau télématique, par exemple autoriser l'accès à des services de banque électronique, commerce électronique, retrait de liquide ou transactions commerciales, accès à des sites web protégés et à des ressources partagées pour la gestion de courrier électronique, accès à des zones contrôlées, dans lequel :

ladite partie fournisseur est connectée au réseau au moyen d'un système de communications et de traitement électronique (S) capable de gérer une procédure pour identifier des parties utilisateurs autorisées à opérer avec le fournisseur,

chaque partie utilisateur peut se connecter au réseau au moyen d'un système de communications et de traitement électronique respectif (C), et

la partie fournisseur demande un mot de passe (PWD) temporaire identifiant la partie demandant l'autorisation pour autoriser l'accès aux services délivrés,

**caractérisé en ce que** les systèmes de communications et de traitement (C, S) desdites partie utilisateur et partie fournisseur sont disposés pour exécuter un procédé d'identification selon les revendications 1 à 21.

**23.** Système selon la revendication 22, **caractérisé en ce que** ledit système de traitement (C) de la partie utilisateur comprend un terminal de traitement, de stockage et de communications électronique et un module de personnalisation électronique programmable qui peut être relié audit terminal.

**24.** Système selon la revendication 23, **caractérisé en ce que** ledit module de personnalisation comprend une carte à microprocesseur amovible.

**25.** Système selon la revendication 23 ou 24, **caractérisé en ce que** ledit module de personnalisation inclut au moins une unité de mémoire non volatile réinscriptible, stockant une variable dynamique (n ; p) indiquant le nombre de connexions entre la partie utilisateur et la partie fournisseur qui ont été effectuées précédemment et une table d'initialisation.

**26.** Système selon la revendication 25, **caractérisé en ce que** ladite table d'initialisation comprend deux ensembles, respectivement un premier ensemble incluant une pluralité de chaînes de caractères (JLY$_k$) et un second ensemble incluant une pluralité de nombres entiers (p) en correspondance bi-univoque avec les chaînes de caractères (JLY$_k$) du premier ensemble.

**27.** Système selon la revendication 26, **caractérisé en ce que** ledit second ensemble ne comprend pas de nombres consécutifs.

**28.** Système selon la revendication 23, **caractérisé en ce que** ledit terminal comprend au moins une unité de mémoire non volatile stockant des données identifiant le terminal et/ou la partie utilisateur.

**29.** Système selon la revendication 25 dépendante de la revendication 24, **caractérisé en ce que** ladite au moins une unité de mémoire du module de personnalisation stocke des données d'identification de carte et les algorithmes nécessaires pour exécuter le procédé d'identification par le terminal.

**30.** Système selon la revendication 29, **caractérisé en ce que** ledit terminal de traitement de l'utilisateur comprend un dispositif de lecture de carte électronique et une unité de traitement capable d'exécuter les programmes stockés sur la carte.

**31.** Système selon l'une quelconque des revendications 23 à 30, **caractérisé en ce que** ledit terminal peut être incorporé dans un dispositif d'interface à un réseau télématique.

**32.** Système selon la revendication 31, dans lequel ledit terminal peut être incorporé dans un téléphone.

**33.** Système selon la revendication 31, dans lequel ledit terminal peut être incorporé dans un ordinateur de poche.

**34.** Système selon la revendication 24, **caractérisé en ce que** ledit terminal est capable de recevoir plusieurs cartes et comporte des moyens pour sélectionner la carte à utiliser.

**35.** Système selon l'une quelconque des revendications 23 à 34, **caractérisé en ce que** ledit terminal comprend des moyens d'affichage pour la présentation des mots de passe générés et un clavier pour la sélection, le réglage et le contrôle.

**36.** Système selon la revendication 35, **caractérisé en ce que** ledit clavier comprend des touches marquées avec des caractères pour entrer les données demandées dans la procédure d'identification et au moins un bouton-poussoir pour activer une procédure pour initialiser le système.

**37.** Système selon l'une quelconque des revendications 23 à 36, **caractérisé en ce que** ledit terminal comprend un dispositif de reconnaissance vocale et un dispositif pour émettre des messages audio.

**38.** Système selon l'une quelconque des revendications 23 à 37, **caractérisé en ce que** ledit terminal comprend un dispositif pour lire des données biométriques de la partie utilisateur.

**39.** Système selon l'une quelconque des revendications 23 à 38, **caractérisé en ce que** ledit terminal est en outre pourvu d'un port de communications lui permettant d'être connecté directement à un dispositif d'interface à un réseau télématique.

## FIG. 1

# FIG. 2